# EUROPÄISCHE PATENTSCHRIFT

(11) **EP 4 110 563 B1**
(45) Veröffentlichungstag und Bekanntmachung des Hinweises auf die Patenterteilung: **02.04.2025**
(21) Anmeldenummer: 21708581.0
(22) Anmeldetag: 24.02.2021
(51) Int. Cl.: B25J 17/02

(54) **KOMPAKTES 6-ACHS-POSITIONIERSYSTEM**
COMPACT 6-AXIS POSITIONING SYSTEM
SYSTÈME COMPACT DE POSITIONNEMENT À 6 AXES

(30) Priorität: 24.02.2020 DE 102020104731
(43) Veröffentlichungstag der Anmeldung: 04.01.2023
(73) Patentinhaber: Physik Instrumente (PI) SE & Co. KG, 76228 Karlsruhe (DE)
(72) Erfinder: SANDER, Christian, 76307 Karlsbad (DE); GLOESS, Rainer, 76228 Karlsruhe (DE); RUDOLF, Christian, 76307 Karlsbad (DE)
(74) Vertreter: Grünecker Patent- und Rechtsanwälte PartG mbB
(86) Internationale Anmeldenummer: PCT/EP2021/054492
(87) Internationale Veröffentlichungsnummer: WO 2021/170604

(56) Entgegenhaltungen:
- EP-A1- 1 585 903
- CN-A- 107 134 209
- CN-A- 107 538 231
- GB-A- 2 505 558
- US-A- 4 988 244
- STOUGHTON R S ET AL: "A MODIFIED STEWART PLATFORM MANIPULATOR WITH IMPROVED DEXTERITY", IEEE TRANSACTIONS ON ROBOTICS AND AUTOMATION, IEEE INC, NEW YORK, US, vol. 9, no. 2, 1 April 1993 (1993-04-01), pages 166 - 173, XP000415172, ISSN: 1042-296X, DOI: 10.1109/70.238280
- YAO J ET AL: "Spatially isotropic configuration of Stewart platform-based force sensor", MECHANISM AND MACHINE THEORY, PERGAMON, AMSTERDAM, NL, vol. 46, no. 2, 1 February 2011 (2011-02-01), pages 142 - 155, XP027534192, ISSN: 0094-114X, [retrieved on 20101030]

## Beschreibung

Die vorliegende Erfindung betrifft ein 6-Achs-Positioniersystem nach dem Oberbegriff von Anspruch 1.

Derartige 6-Achs-Positioniersysteme werden auch als Hexapoden bezeichnet und bieten sechs Freiheitsgrade der Bewegung auf kompaktem Raum. Die bewegbare Einheit besteht in aller Regel aus einer mit dem oberen Ende der Aktoren verbundenen Plattform (bewegbare Einheit), auf der zu positionierende Elemente bzw. Aufbauten angeordnet werden. 6-Achs-Positioniersysteme gibt es in unterschiedlichen Größen und für die unterschiedlichsten Anwendungen. Als Komponenten in industriellen Produktionsprozessen positionieren Hexapoden selbst hohe Lasten mit Submikrometer-Genauigkeit. Für industrielle Anwendungen gibt es Kombinationen aus absolut messenden Positionssensoren, geeigneter Software und Motioncontrollern, mit denen sich auch komplexe Bewegungsprofile komfortabel ausführen lassen. Ein bevorzugter Antrieb der Aktoren sind bürstenlose DC-Motoren mit Bremse. Der Arbeitsraum eines solchen 6-Achs-Positioniersystem hängt sehr stark von der Längenveränderbarkeit (Teleskopierbarkeit) der Aktoren ab. Insbesondere bei Schwerlast-6-Achs-Positioniersystemen gibt es diesbezüglich Beschränkungen und es gibt Bestrebungen, kompakte 6-Achs-Positioniersysteme mit erweiterten Arbeitsraum auch für Hochlasteinsätze bereitzustellen.

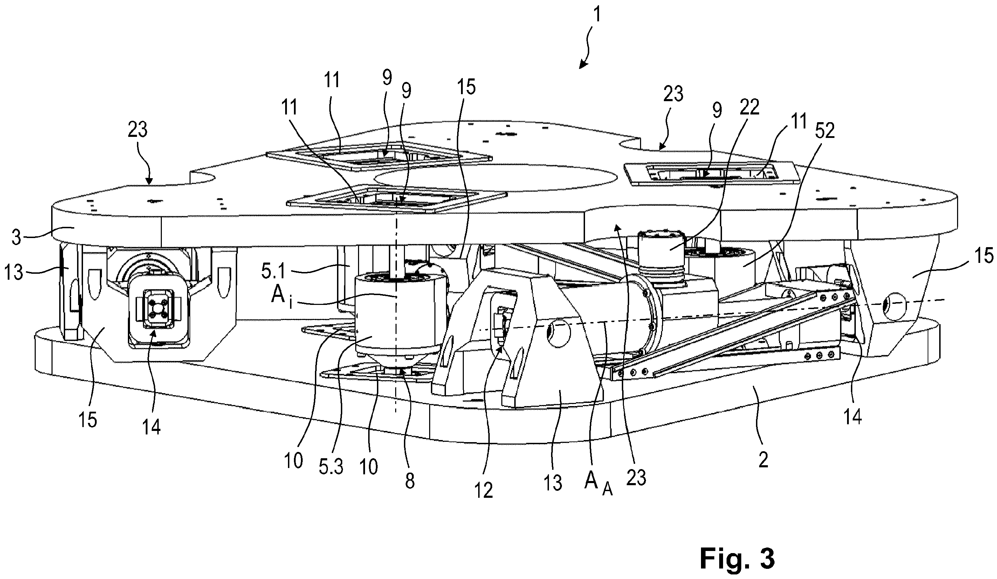

Die gattungsgemäße US 4 988 244 A befasst sich mit einem Sechs-Achs-Maschinenwerkzeug mit einer Basis und einer Trägerplatte, die mittels sechs längenverstellbaren Beinen verbunden sind. In dem Ausführungsbeispiel der Fig. 3 bis 5 sind drei innenliegende Beine und drei außenliegende Beine vorhanden. Für die obere und untere Anbringung der längenverstellbaren Beine sind neben dem konkret gezeigten Gelenk auch Kugelgelenke möglich.

Das Dokument STOUGHTON R S ET AL: "A MODIFIED STEWARD PLATFORM MANIPULATOR WITH IMPROVED DEXTERITY", IEEE TRANSACTIONS ON ROBOTICS AND AUTOMATION; IEEE INC, NEW YORK, US, Bd. 9, Nr. 2, 1. April 1993 (1993-04-01), Seiten 166-173, XP000415172, ISSN: 1042-296X, DOl: 10.1109/70.238280 befasst sich mit einem modifizierten Stewart-Plattformmanipulator (MSP). Bei diesem Design sind drei der sechs Beine auf einem inneren Kreis sowohl an der Basis als auch an der oberen Plattform angeordnet, während die drei anderen Beine jeweils auf einem äußeren Kreis, der zum inneren Kreis konzentrisch ist, angeordnet sind (siehe Fig. 1 (b)). In diesem Dokument ist auch die generelle Aussage getroffen, dass diese Beine durch die unterschiedlichsten Gelenke an der Basis und der oberen Plattform angebracht werden können.

Das Dokument YAO J ET AL: "Spatially isotropic configuration of Stewart platform-based force sensor", MECHANISM AND MACHINE THEORY, PERGAMON, AMSTERDAM, NL, Bd. 46, Nr. 2, 1. Februar 2011 (2011-02-01), Seiten 142-155, XP027534192, ISSN: 0094-114X [gefunden am 2010-10-30] befasst sich mit der Weiterbildung eines auf einer Stewartplattform basierenden Kraftsensors. Aus der Fig. 3 geht eine modifizierte Stewartplattform hervor. Drei der sechs Beine sind sowohl an der Basis als auch an der oberen Plattform auf einem inneren Kreis und die drei anderen Beine jeweils auf einem äußeren Kreis, der zum ersten Kreis konzentrisch ist, angeordnet.

Ein weiteresPositioniersystem wird in der CN 107 134 209 A beschrieben. Dieses Positioniersystem ist als Schwerlast-Positioniersystem ausgestaltet und umfasst eine Bodenplatte, eine Lastplattform, sechs außenliegende Aktoren sowie drei zentral angeordnete Lastausgleichsvorrichtungen. Die Lastausgleichsvorrichtungen umfassen einen schräg angeordneten Hydraulikzylinder, der an seinem unteren Ende indirekt mit der Bodenplatte verbunden ist und an dessen oberen Ende ein Schlitten mit daran angeordnetem Rollenblock vorgesehen ist. Ein einseitig fest angeordnetes Seilpaar ist über diesen Rollenblock geführt und an seinem anderen Ende an einem weiteren Schlitten befestigt. Beide Schlitten gleiten auf einer schrägen Schlittenbahn. Auf dem unteren Schlitten ist gelenkig das untere Ende eines Tragarms angeordnet, dessen oberes Ende mit der Lastplattform verbunden ist. Durch Ein- oder Ausfahren des Hydraulikzylinders wird der obere Schlitten und über den Seilzug der untere Schlitten zusammen mit dem Tragarm verfahren. Aufgrund des Seilzugs ist eine Untersetzung vorhanden.

Die DE 100 60 032 B4 befasst sich mit einem Parallelmechanismus mit sechs Freiheitsgraden für Mikropositionieraufgaben. Die Konstruktion umfasst eine Bodenplattform, eine bewegliche Plattform und dazwischen angeordnete drei außenliegende Verbindungsglieder und innenliegende Verbindungsglieder. Die Verbindungsglieder sind als Aktoren ausgebildet. Wie insbesondere aus Figur 4 der DE 100 60 032 B4 zu erkennen ist, sind die unteren Enden der außenliegenden Verbindungsglieder innerhalb des Bereichs angeordnet, der von den unteren Enden der innenliegenden Verbindungsglieder umgrenzt ist. Die oberen Enden der innenliegenden Verbindungsglieder sind mit einem gemeinsamen Kugelgelenk zentral und im Abstand unterhalb der Plattform miteinander verbunden. Der innere Bestandteil des Kugelgelenks ist mit der Plattform verbunden. Aufgrund dieser Anordnung haben die außenliegenden Verbindungsglieder eine aufrechtere Grundposition als die innenliegenden Verbindungsglieder.

Die CN 107 538 231 A befasst sich mit einer Mehrachsen-Positioniervorrichtung, die eine untere Plattform, eine obere Plattform, sechs schräg angeordnete Aktoren und drei im Zentrum angeordnete Tragsäulen aufweist. Die Last wird hauptsächlich durch die Tragsäulen aufgenommen. Die Tragsäulen sind in Figur 3 der CN 107 538 231 A näher dargestellt und umfassen eine lineare Führung, an deren oberen Ende eine mit der oberen Plattform verbundene Gelenkeinrichtung angeordnet ist. Das Linearlager ist mittels einer Druckfeder an einer Basis abgestützt. Die sechs Aktoren sorgen für die präzise Ansteuerung.

Es ist daher die Aufgabe der vorliegenden Erfindung, ein 6-Achs-Positioniersystem der eingangs genannten Art für eine kompakte Bauweise, insbesondere flachere Bauweise, bereitzustellen.

Diese Aufgabe wird durch ein 6-Achs-Positioniersystem mit den Merkmalen gemäß Anspruch 1 gelöst. Vorteilhafte Ausgestaltungen sind in den Unteransprüchen beschrieben.

Bei einem erfindungsgemäßen 6-Achs-Positioniersystem werden hierzu die sechs Aktoren in zwei Gruppen mit jeweils drei Aktoren unterteilt. Bevorzugt sind die Aktoren unterschiedlicher Gruppen auch unterschiedlich ausgestaltet. Die Aktoren der ersten Gruppe sind innerhalb eines von den Aktoren der zweiten Gruppe umgrenzten Bereichs auf der Basis und innerhalb eines von den Aktoren der zweiten Gruppe umgrenzten Bereichs an der bewegbaren Einheit angeordnet. Die unteren und oberen Enden der drei Aktoren der zweiten Gruppe sind jeweils sowohl mit der Basis als auch mit der bewegbaren Einheit mittels einer Schwenkbefestigung, bevorzugt mit wenigstens zwei Schwenkachsen, verbunden, wobei jeweils die oberen Enden der drei Aktoren der ersten Gruppe mit der bewegbaren Einheit jeweils mittels einer Schwenkbefestigung, bevorzugt mit wenigstens zwei Schwenkachsen, verbunden sind. Jeweils die unteren Enden der drei Aktoren der ersten Gruppe sind mit der Basis jeweils mittels einer im Verstellbetrieb des 6-Achs-Positioniersystems verschwenkbaren Schwenkbefestigung, bevorzugt mit wenigstens zwei Schwenkachsen, verbunden. Des Weiteren lässt sich die bewegbare Einheit mit erweitertem Arbeitsraum um die an der bewegbaren Einheit angebrachten Enden der Aktoren der ersten Gruppe bewegen. Hierdurch besteht die Möglichkeit, diese drei Aktoren der ersten Gruppe gegenüber den drei Aktoren der zweiten Gruppe kürzer auszubilden und gegebenenfalls mit mehr Hubkraft auszustatten. Eine Art Arbeitsaufteilung zwischen den Aktoren der ersten Gruppe und der zweiten Gruppe ist somit möglich, was insgesamt zu einer kompakteren, insbesondere flacheren, Bauweise mit erweitertem Arbeitsraum führt. Das bedeutet, dass die Aktoren beider Gruppen aktiv und gemeinsam an der genauen Verstellung und genauen Positionierung der bewegbaren Einheit beteiligt sind. Im Gegensatz dazu, sind sowohl bei der CN 107 134 209 A als auch bei der CN 107 538 231 A für die genaue Verstellung und genaue Positionierung die sechs äußeren, präziser arbeitenden Aktoren verantwortlich, während die innenliegenden Lastausgleichsvorrichtungen bzw. Tragsäulen rein der Traglastaufnahme dienen. Deshalb sind bei einer bevorzugten Variante der vorliegenden Erfindung auch exakt drei Aktoren der ersten Gruppe und exakt drei Aktoren der zweiten Gruppe vorhanden, deren Präzision insbesondere gleich gut ist.

Als Aktor, auch Aktuator, sind im vorliegenden Fall antriebstechnische Baueinheiten gemeint, die ein elektrisches Signal in mechanische Bewegungen bzw. Veränderungen physikalischer Größen umsetzen und damit aktiv in den gesteuerten bzw. geregelten Prozess eingreifen.

Bevorzugt können die Schwenkbefestigungen der drei Aktoren der ersten Gruppe an der bewegbaren Einheit und/oder die Schwenkbefestigungen der drei Aktoren der ersten Gruppe an der Basis jeweils getrennt voneinander ausgebildet sein, d.h. jeder Aktor der ersten Gruppe hat an der bewegbaren Einheit und/oder an der Basis eine separate, von den anderen Schwenkbefestigungen beabstandete Schwenkbefestigung. Des Weiteren können die Schwenkbefestigungen der drei Aktoren der zweiten Gruppe an der bewegbaren Einheit und/oder die Schwenkbefestigungen der drei Aktoren der zweiten Gruppe an der Basis jeweils getrennt voneinander ausgebildet sein, d.h. jeder Aktor der zweiten Gruppe hat an der bewegbaren Einheit und/oder an der Basis eine separate, von den anderen Schwenkbefestigungen beabstandete Schwenkbefestigung.

Damit die drei Aktoren der ersten Gruppe eine möglichst hohe Hublast aufnehmen können, sind diese derart längenveränderlich ausgestaltet und mit der Basis und der bewegbaren Einheit schwenkbar verbunden, dass die drei Aktoren der ersten Gruppe jeweils in einem Winkelbereich von maximal ± 30°, bevorzugt maximal ± 15°, zu einer Vertikalen bzw. Senkrechten zu einer von der Basis aufgespannten Ebene bewegbar angeordnet sind. Die Basis und auch die bewegbare Einheit sind in der Grundstellung in aller Regel waagerecht bzw. horizontal angeordnet, so dass sich der Winkelbezug zu einer Vertikalen ergibt. Prinzipiell können aber 6-Achs-Positioniersysteme an sich unterschiedliche Winkellagen einnehmen, d.h. z.B. die Basis aus der Waagerechten bzw. Horizontalen herausgekippt werden, weshalb dann ein Bezug zu einer Senkrechten vorteilhaft ist. Eine von der Basis aufgespannte Ebene ist z.B. durch eine die Mittelpunkte der Verbindungsstellen der drei Aktoren einer Gruppe enthaltenen Ebene vorgegeben.

Des Weiteren sind die drei Aktoren der zweiten Gruppe derart längenveränderlich und mit der Basis und der bewegbaren Einheit schwenkbar verbunden, dass die drei Aktoren der zweiten Gruppe jeweils in einem Winkelbereich von ≥ 0° bis maximal 45°, bevorzugt ≥ 0° bis maximal 30°, zu einer Horizontalen bzw. Parallelen zu einer von der Basis aufgespannten Ebene angeordnet sind. Die drei Aktoren der zweiten Gruppe sind daher in aller Regel wesentlich flacher angeordnet, als die drei Aktoren der ersten Gruppe. Bei einer solchen Anordnung benötigen die drei Aktoren der zweiten Gruppe einen höheren Stellweg. Das ist nur möglich, wenn diese drei Aktoren seitlich an den drei Aktoren der ersten Gruppe vorbeigeführt werden.

Die drei Aktoren der ersten Gruppe lassen sich insbesondere dann als vorrangig lasttragende Aktoren ausgestalten, wenn sie gemäß einer Ausführungsform in einer Grundstellung die gleiche Länge aufweisen und in dieser Grundstellung die Hauptachsen der drei Aktoren der ersten Gruppe parallel zu einer Vertikalen bzw. einer Senkrechten zu einer von der Basis aufgespannten Ebene angeordnet sind. In dieser Grundstellung können diese drei Aktoren der ersten Gruppe nahezu die gesamte Last alleine aufnehmen, während die drei Aktoren der zweiten Gruppe vorrangig der Positionierung dienen. Bei entsprechender Längenveränderung der Aktoren verschieben sich dann die Verhältnisse, wobei die Haupthublast immer noch von den drei Aktoren der ersten Gruppe getragen wird.

Gemäß einer weiteren Ausführungsform ist vorgesehen, dass die drei Aktoren der zweiten Gruppe derart längenveränderlich und mit der Basis und der bewegbaren Einheit schwenkbar verbunden sind, dass bei einer Hubbewegung der drei Aktoren der ersten Gruppe von einer minimalen zu einer maximalen Hubposition bei Beibehaltung der Grundstellung die drei Aktoren der zweiten Gruppe jeweils in einem Winkelbereich von ≥ 0° bis mindestens 15°, bevorzugt ≥ 0° bis mindestens 30°, zu einer Horizontalen bzw. Parallelen zu einer von der Basis aufgespannten Ebene bewegbar angeordnet sind. Im Extremfall können daher die drei Aktoren der zweiten Gruppe in der minimalen Hubposition flach bzw. waagerecht liegen und bei der maximalen Hubposition im spitzen Winkel angestellt sein. Insgesamt führt dies zu einer sehr flachen und kompakten Konstruktion.

Obwohl auch auf Standard- und auch auf Gleichteile zurückgegriffen werden kann, ist es bevorzugt, wenn die drei Aktoren der ersten Gruppe und die drei Aktoren der zweiten Gruppe unterschiedlich ausgestaltet sind. Gemäß einer bevorzugten Ausführungsform sind die drei Aktoren der ersten Gruppe als Schwerlastaktoren ausgestaltet, die laststärker sind als die drei Aktoren der zweiten Gruppe. Bevorzugt sind die drei Aktoren der ersten Gruppe mindestens doppelt so laststark wie die Aktoren der zweiten Gruppe. Insbesondere bei exzentrisch wirkenden Lasten ist es vorteilhaft, wenn die Aktoren der ersten Gruppe mindestens fünfmal so laststark, wie die der zweiten Gruppe sind.

Nachdem die drei Aktoren der ersten Gruppe innerhalb des von den Aktoren der zweiten Gruppe umgrenzten Bereichs auf der Basis und einer bewegbaren Einheit angeordnet sein sollen, ist es darüber hinaus zu bevorzugen, wenn dies in einer bestimmten hervorsehbaren Weise erfolgt, wodurch sich auch gegebenenfalls eine bessere Lastverteilung erhalten lässt. Gemäß einer Ausführungsform ist vorgesehen, dass die Mittelpunkte der Schwenkbefestigungen der drei Aktoren der ersten Gruppe an der Basis und/oder der bewegbaren Einheit auf einer ersten Kreislinie und die Mittelpunkte der Schwenkbefestigung der drei Aktoren der zweiten Gruppe an der bewegbaren Basis und/oder der bewegbaren Einheit auf einer entsprechenden zweiten Kreislinie liegen und die erste Kreislinie innerhalb der entsprechend zugehörigen zweiten Kreislinie an der Basis und/oder der bewegbaren Einheit liegt, bevorzugt die erste Kreislinie konzentrisch zur entsprechend zugehörigen zweiten Kreislinie an der Basis und/oder an der bewegbaren Einheit positioniert ist. Es werden nur die beiden Kreislinien an der Basis oder die beiden Kreislinien an der bewegbaren Einheit miteinander verglichen.

Hierbei kann weiter vorgesehen werden, dass die von der ersten Kreislinie umgrenzte Fläche an der Basis und/oder der bewegbaren Einheit mindestens doppelt so klein, bevorzugt mindestens dreimal so klein und weiter bevorzugt mindestens viermal so klein ist wie die von der entsprechend zugeordneten zweiten Kreislinie umgrenzte Fläche an der Basis und/oder der bewegbaren Einheit. Hierdurch ist sichergestellt, dass die drei Aktoren der ersten Gruppe möglichst kompakt und zentral an dem 6-Achs-Positioniersystem gruppiert sind und ausreichend Raum zur entsprechenden Ausgestaltung sowohl der drei zentral angeordneten Aktoren als auch der weiter außenliegenden Aktoren vorhanden ist.

Entsprechend der Arbeitsaufteilung der Aktoren ist bei einer weiteren Ausführungsform vorgesehen, dass die Länge der drei Aktoren der zweiten Gruppe mindestens 1,5-mal, bevorzugt mindestens 2-mal, größer ist als die Länge der drei Aktoren der ersten Gruppe, wenn sich die Aktoren der ersten Gruppe in einer mittleren Stellung befinden.

Darüber hinaus kann ein 6-Achs-Positioniersystem gemäß einer weiteren Ausführungsform so ausgestaltet sein, dass die bewegbare Einheit Aussparungen bzw. Fenster aufweist, in die mindestens ein Bestandteil bzw. ein Anbau der bzw. an den drei Aktoren der zweiten Gruppe in einer vollständig eingefahrenen Stellung der drei Aktoren der ersten Gruppe eingeführt sind. Trotz eventueller Bestandteile (z.B. ein bürstenloser DC-Motor oder ein Getriebe) bzw. Anbauten ist z.B. eine vollständig waagerechte Anordnung der Aktoren der zweiten Gruppe in dieser Stellung möglich, weil eventuell vorhandene hinderliche Bestandteile nicht mit der bewegbaren Einheit kollidieren, sondern in Aussparungen bzw. Fenstern aufgenommen werden können. Dies trägt in hohem Maße zur weiteren Kompaktheit bei.

Die Gruppierung der Aktoren ermöglicht andere Anordnungsformen. Bevorzugt ist vorgesehen, dass Verbindungsgeraden der Mittelpunkte der Schwenkbefestigungen der drei Aktoren der ersten Gruppe an der Basis und an der bewegbaren Einheit jeweils ein Dreieck aufspannen, und dass Verbindungsgeraden der Mittelpunkte der Schwenkbefestigungen der drei Aktoren der zweiten Gruppe an der Basis und an der bewegbaren Einheit jeweils ein Dreieck aufspannen, wobei die entsprechend zugeordneten Dreiecke an der Basis und der bewegbaren Einheit eine gleiche Ausrichtung ihrer Ecken aufweisen, oder um einen maximalen Winkel von 45° zueinander gedreht sind. Es werden nur die beiden Dreiecke an der Basis oder die beiden Dreiecke an der bewegbaren Einheit miteinander verglichen.

Die Gruppierung der Aktoren lässt auch eine andere Konfiguration der Basis und/oder der bewegbaren Einheit zu. Gemäß einer vorteilhaften Ausgestaltung können bzw. kann die Basis und/oder die bewegbare Einheit eine Dreiecksform mit bevorzugt abgerundeten Ecken aufweisen. Diese Elemente nehmen dann nur noch die erforderliche Abmessung ein.

Insbesondere eine Ausgestaltung, die auf Standardbauelemente zurückgreift, ist vorteilhafterweise so ausgestaltet, dass in einer vollständig eingefahrenen Stellung der drei Aktoren der ersten Gruppe die Hauptachsen der drei Aktoren der zweiten Gruppe jeweils um maximal ± 15° geneigt, bevorzugt parallel, zu einer angrenzenden Seitenkante des jeweils zugehörigen aufgespannten Dreiecks und/oder der angrenzenden Seitenkante der Dreiecksform(en) der Basis und/oder der bewegbaren Einheit angeordnet sind. Insbesondere bei paralleler Anordnung der drei Aktoren der zweiten Gruppe sind die Dreiecksformen der Basis und der bewegbaren Einheit gleich ausgerichtet, im besten Fall deckungsgleich und parallel zueinander orientiert.

Bei einer anderen Ausgestaltung ist vorteilhafterweise vorgesehen, dass in einer vollständig eingefahrenen Stellung der drei Aktoren der ersten und der zweiten Gruppe die Hauptachsen der drei Aktoren der zweiten Gruppe jeweils in einem Bereich von 15° bis 45°, bevorzugt ca. 30°, zu der angrenzenden Seitenkante des zugehörigen aufgespannten Dreiecks und/oder der angrenzenden Seitenkante der Dreiecksform(en) der Basis und/oder der bewegbaren Einheit geneigt angeordnet sind. Dies führt dazu, dass die Verstellwirkung der drei Aktoren der zweiten Gruppe vergrößert wird und auch mehr Platz zur Anordnung der drei Aktoren der ersten Gruppe erreicht wird. Dies gibt Raum für speziell ausgebildete Aktoren. In einer bevorzugten Ausgestaltung und bei der Verwendung eines 30°-Winkels, können dann die Dreiecksformen der Basis und der bewegbaren Einheit entsprechend um 30° zueinander verdreht sein. Hier besteht dann die Möglichkeit, die Anbringungspunkte für die Aktoren der zweiten Gruppe entsprechend weiter nach außen zu verlagern, insbesondere in die Ecken der zugehörigen Dreiecksformen.

Als Aktoren werden im vorliegenden Fall für die erste und/oder die zweite Gruppe antriebstechnische Baueinheiten verwendet, die eine Aufnahmeeinrichtung aufweisen, aus der bzw. in die eine bewegbare Verstelleinrichtung (z.B. ein Verstellkolben) teleskopartig aus- und einfahrbar ist, wobei die Aufnahmeeinrichtung an der Basis und die bewegbare Verstelleinrichtung an der bewegbaren Einheit angebracht sind oder die Aufnahmeeinrichtung an der bewegbaren Einheit und die bewegbare Verstelleinrichtung an der Basis angebracht sind. Die eigentliche gesteuerte bzw. geregelte Antriebseinheit befindet sich bevorzugt in und/oder an der Aufnahmeeinrichtung.

Im Folgenden werden Ausführungsbeispiele der vorliegenden Erfindung anhand von Zeichnungen näher erläutert. Es zeigen:
- Fig. 1: eine perspektivische Darstellung eines ersten Ausführungsbeispiels eines erfindungsgemäßen 6-Achs-Positioniersystems,
- Fig. 2: das 6-Achs-Positioniersystem aus Fig. 1 in einer Draufsicht, wobei aus Übersichtlichkeitsgründen die bewegbare Einheit weggelassen wurde,
- Fig. 3: eine perspektivische Ansicht eines zweiten Ausführungsbeispiels eines erfindungsgemäßen 6-Achs-Positioniersystems und
- Fig. 4: eine Draufsicht des 6-Achs-Positioniersystems aus Fig. 3.

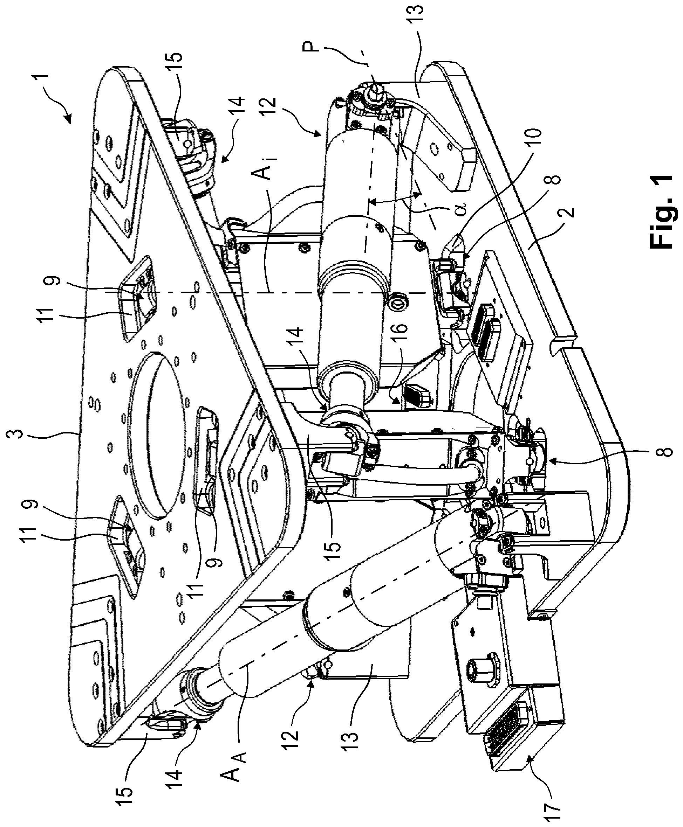

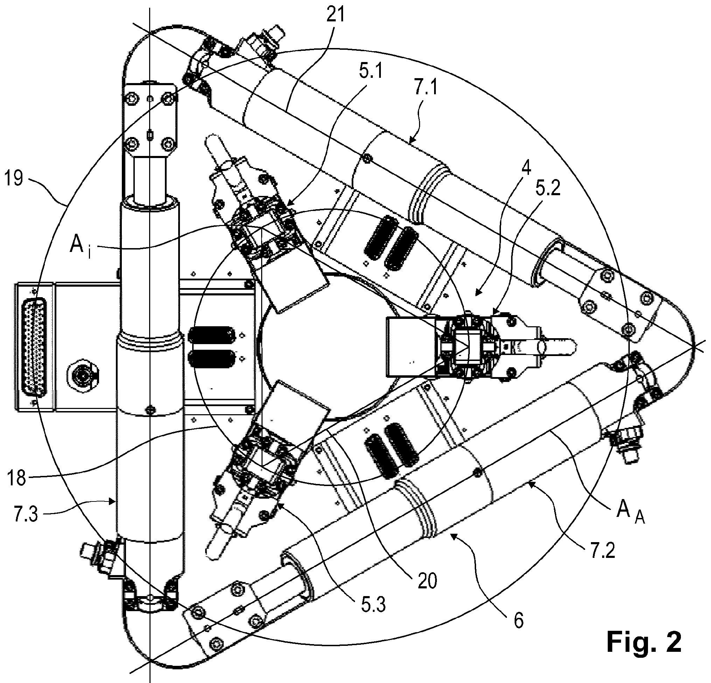

Die in Fig. 1 und 2 dargestellte erste Ausführungsform eines 6-Achs-Positioniersystems 1 weist eine Basis 2 als dreiecksförmige Plattform und eine ebenfalls als dreiecksförmige Plattform ausgestaltete bewegbare Einheit 3 sowie dazwischen angeordnete, noch näher zu bezeichnende Aktoren auf. Sowohl die Basis 2 als auch die bewegbare Einheit 3 sind jeweils von einer Platte von im Wesentlichen gleichmäßiger Dicke, bevorzugt aus einem Metall, z.B. Stahl, gebildet. Die zwischen der Basis 2 und der bewegbaren Einheit 3 angeordneten Aktoren sind zu einer ersten Gruppe 4 mit den Aktoren 5.1, 5.2 und 5.3 und einer zweiten Gruppe 6 mit den Aktoren 7.1, 7.2 und 7.3 gruppiert. Die Aktoren 5.1, 5.2 und 5.3 unterscheiden sich Funktion und Aufbau von den Aktoren 7.1, 7.2 und 7.3, während die Aktoren einer jeweiligen Gruppe 4 oder 6 gleich aufgebaut sind. Die Aktoren 5.1, 5.2 und 5.3 der ersten Gruppe 4 sind mit ihrem unteren Ende 8 an der Basis 2 und mit ihren oberen Enden 9 an der bewegbaren Einheit 3 schwenkbar angeordnet. Die schwenkbare Anordnung erfolgt nach Art eines Kreuzgelenks (Kardangelenk), so dass Schwenkbewegungen um zwei Achsen möglich sind. Zur kompakteren Anordnung weist die Basis 2 jeweils eine Fensteraussparung 10 zur Anbringung des unteren Endes 8 der Aktoren 5.1, 5.2 und 5.3 auf, so dass eine Achse des Kreuzgelenks innerhalb der Fensteraussparung 10 angebracht ist. In gleicher Weise ist die bewegbare Einheit 3 mit drei Fensteraussparungen 11 versehen, die zur schwenkbaren Anordnung der oberen Enden 9 der Aktoren 5.1, 5.2 und 5.3 dienen. Wiederum ist eine Achse des zugehörigen Kreuzgelenks in der Fensteraussparung 11 befestigt.

Ein unteres Ende der Aktoren 7.1, 7.2 und 7.3 ist schwenkbar an jeweils einem auf der Basis 2 angeordneten Lagerblock 13 angeordnet. Zur schwenkbaren Anordnung wird wiederum ein Kreuzgelenk für die Verschwenkung um zwei Achsen verwendet. In gleicher Weise erfolgt die Anordnung eines oberen Endes 14 der Aktoren 7.1, 7.2 und 7.3 mittels eines Lagerblocks 15, der an der bewegbaren Einheit 3 angebracht ist. Auch am oberen Ende 14 erfolgt die schwenkbare Anordnung mittels eines Kreuzgelenks zur Verschwenkung um zwei Achsen.

Aufgrund der gewählten Anordnung sind die Aktoren 5.1, 5.2 und 5.3 der ersten Gruppe 4 aufrechtstehender angeordnet als die Aktoren 7.1, 7.2 und 7.3 der zweiten Gruppe 6. Hilfreich für eine solche Anordnung sind auch die Fensteraussparungen 10 und 11 sowie die beiden Lagerblöcke 13 und 15. Die Fensteraussparungen 10 und 11 sind jeweils im Vergleich zu den zugehörigen Lagerblöcken 13 bzw. 15 weiter innenliegend an der Basis 2 bzw. der bewegbaren Einheit 3 platziert. Hierdurch sind die Aktoren 5.1, 5.2, 5.3 der ersten Gruppe 4 innerhalb eines von den Aktoren 7.1, 7.2, 7.3 der zweiten Gruppe 6 umgrenzten Bereichs auf der Basis 2 bzw. der bewegbaren Einheit 3 angeordnet. Nachdem der Lasteintrag von oben über die bewegbare Einheit 3 erfolgt, ist es auch möglich, dass die Hauptlast von den Aktoren 5.1, 5.2, 5.3 aufgenommen wird. Diese sind deshalb als Schwerlastaktoren ausgestaltet, die wesentlich laststärker sind als die drei Aktoren 7.1, 7.2, 7.3 der zweiten Gruppe 6. Alle 6 Aktoren sind längenverstellbar (teleskopierbar) und werden mittels eines bürstenlosen DC-Motors angetrieben. Die Ansteuerung erfolgt mittels der Steckverbinderplattformen 16 sowie dem Anschluss 17. Hierdurch erfolgt die Strom- und Spannungsversorgung. In den Zeichnungen sind Sensoren (Wegmesssensoren etc.) nicht dargestellt. Die prinzipielle Funktionsweise und Ansteuerung von 6-Achs-Positioniersystemen sind allerdings an sich bekannt, weshalb hier nicht näher darauf eingegangen wird. Auf jeden Fall lässt sich die bewegbare Einheit 3 relativ zur Basis 2 sowohl anheben, senken oder verschieben und um alle drei Raumachsen kippen. Die Verstellbarkeit der Aktoren 5.1, 5.2, 5.3 und 7.1, 7.2 und 7.3 sowie deren Anordnung gibt dabei den möglichen Arbeitsraum vor. Aufgrund der verwendeten Antriebstechnik sind sehr präzise Ansteuerungen und Positionierungen auch im vorliegenden Schwerlastbereich möglich.

In Fig. 1 und Fig. 2 ist das 6-Achs-Positioniersystem in einer Grundstellung gezeigt, in der die Basis 2 und die bewegbare Einheit 3 parallel zueinander ausgerichtet sind, d.h. die Aktoren 5.1, 5.2 und 5.3 der ersten Gruppe 4 weisen die gleiche Länge auf und die Aktoren 7.1, 7.2 und 7.3 der zweiten Gruppe 6 weisen die gleiche Länge auf. Des Weiteren befinden sich die Aktoren 5.1, 5.2 und 5.3 in ihrer mittleren Stellung, weshalb auch die Aktoren 7.1, 7.2 und 7.3 ihre mittlere Stellung einnehmen. In dieser Grundstellung sind die Aktoren 5.1, 5.2 und 5.3 mit ihren Hauptachsen Aᵢ exakt vertikal ausgerichtet, d.h. sie stehen senkrecht auf einer von der Basis 2 aufgespannten Ebene. Die Aktoren 7.1, 7.2 und 7.3 weisen in dieser Stellung etwa einen Winkel α zur Horizontalen bzw. einer Parallelen P zu einer von der Basis 2 aufgespannten Ebene einen Winkel α von ca. 20° auf.

Der Vorteil der in Fig. 1 und 2 dargestellten Ausführungsform besteht darin, dass hier auf bereits bekannte Aktoren zurückgegriffen werden kann und keine Neukonstruktion erforderlich war. Dennoch ergibt sich eine sehr kompakte und flache Ausgestaltung eines 6-Achs-Positioniersystems.

Aus der Fig. 2 ist zu erkennen, dass die Verbindungsmittelpunkte (Kreuzungspunkt des Kreuzgelenks) der Aktoren 5.1, 5.2 und 5.3 an der bewegbaren Einheit 3 auf einer Kreislinie 18 angeordnet ist. Gleiches gilt für die Anordnung der Verbindungsmittelpunkte am unteren Ende 8 an der Basis 2. Die Verbindungsmittelpunkte (z.B. Schnittpunkt der Kreuzgelenke) der Aktoren 7.1, 7.2 und 7.3 befinden sich an der bewegbaren Einheit 3 auf einer Kreislinie 19. In gleicher Weise befinden sich die Verbindungspunkte der unteren Enden 12 ebenfalls auf einer Kreislinie 19. Die zur Basis 2 gehörenden Kreislinien 18 und 19 und die zur bewegbaren Einheit 3 gehörenden Kreislinien 18 und 19 sind konzentrisch zueinander angeordnet. Der Flächeninhalt, der von der Kreislinie 18 umgeben ist, ist wesentlich kleiner als der Flächeninhalt der von der Kreislinie 19 umgeben ist (mindestens doppelt so klein, bevorzugt dreimal so klein und weiter bevorzugt mindestens viermal so klein). Hierdurch ergibt sich die kompakte Gruppierung, die u.a. dafür sorgt, dass bereits bei geringem Hub der Aktoren 5.1, 5.2 und 5.3 eine relativ große Verschwenkung stattfinden kann. Dennoch ist im Zusammenspiel der Aktoren 5.1, 5.2 und 5.3 sowie 7.1, 7.2 und 7.3 eine exakte Positionierung möglich.

In der in Fig. 1 und 2 dargestellten mittleren Stellung der Aktoren 5.1, 5.2 und 5.3 sind die Aktoren 7.1, 7.2 und 7.3 der zweiten Gruppe 6 wesentlich länger als die Aktoren der ersten Gruppe 4 (mindestens 1,5-mal, bevorzugt mindestens 2-mal, größer). Entsprechend ist der maximale Verstellweg eines Aktors 7.1, 7.2 und 7.3 der zweiten Gruppe 6 wesentlich größer als der maximale Verstellweg eines Aktors 5.1, 5.2 und 5.3 der ersten Gruppe 4 (mindestens 1,5-mal, bevorzugt mindestens 2-mal, größer).

Des Weiteren ist aus der Fig. 2 zu erkennen, dass die Mittelpunkte der Schwenkbefestigungen der drei Aktoren 5.1, 5.2 und 5.3 der ersten Gruppe 4 an der Basis 2 und auch an der bewegbaren Einheit 3 jeweils ein Dreieck 20 aufspannen. Die Verbindungsgeraden der Mittelpunkte der Schwenkbefestigungen der drei Aktoren 7.1, 7.2 und 7.3 der zweiten Gruppe 6 an der Basis 2 und auch an der bewegbaren Einheit 3 spannen ebenfalls jeweils ein Dreieck 21 auf. In der gezeigten Grundstellung weisen die Dreiecke 20 und 21 die gleiche Ausrichtung auf, die im Übrigen auch der Ausrichtung der Dreiecksformen der Basis 2 und der bewegbaren Einheit 3 entspricht. Entsprechend verlaufen die Hauptachsen A_{A} der drei Aktoren 7.1, 7.2 und 7.3 der zweiten Gruppe 6 in der Grundstellung jeweils parallel zu einer Seitenkante dieser aufgespannten Dreiecke 20, 21 bzw. der Dreiecksformen der Basis 2 und der bewegbaren Einheit 3.

Im Folgenden wird die Wirkungs- und Funktionsweise des vorangegangenen Ausführungsbeispiels näher erläutert.

Durch gezielte Ansteuerung der Antriebe der Aktoren 5.1, 5.2 und 5.3 sowie 7.1, 7.2 und 7.3 erfolgt eine zielgerichtete Positionierung der bewegbaren Einheit 3 relativ zur Basis 2. Eine gewünschte 6-Achs-Positionierung innerhalb eines vorgegebenen Arbeitsraums ist möglich. Die Hauptlast wird beim Anheben und Absenken durch die Aktoren 5.1, 5.2 und 5.3 der ersten Gruppe 4 getragen. Diese sind deshalb als entsprechende Schwerlastaktoren ausgestaltet, so dass erhebliche Lasten bewegt werden können. Die Aktoren 5.1, 5.2 und 5.3 der ersten Gruppe 4 schwenken dabei lediglich um einen begrenzten Winkelbereich bezüglich einer Vertikalen bzw. Senkrechten zu einer von der Basis 2 aufgespannten Ebene (maximal ± 30°, bevorzugt maximal ± 15°). Die Aktoren 7.1, 7.2 und 7.3 verschwenken daran angepasst ebenfalls nur um einen begrenzten Winkelbereich (von ca. 20° bis maximal 45°, bevorzugt von ca. 20° bis maximal 30°) zu einer Horizontalen bzw. Parallelen P zu einer von Basis 2 aufgespannten Ebene.

Zum Beispiel kann durch Verkürzung oder Teleskopierung der Aktoren 7.1, 7.2 und 7.3 der zweiten Gruppe 6 und entsprechendem Schwenkausgleich und Verlängerung der Aktoren 5.1, 5.2 und 5.3 der ersten Gruppe 4 die bewegbare Einheit 3 gegenüber der Basis 2 gedreht werden, auch ohne dass notwendigerweise der Abstand verändert werden muss. Insgesamt ist der benötigte Stellweg der Aktoren 7.1, 7.2 und 7.3 größer als der der Aktoren 5.1, 5.2 und 5.3.

Alles in allem entsteht ein 6-Achs-Positioniersystem, das kompakt, insbesondere flach aufgebaut ist, und hohe Lasten tragen kann. Dies wird durch die entsprechende Gruppierung und Funktionsaufteilung der beiden Aktorengruppen erreicht.

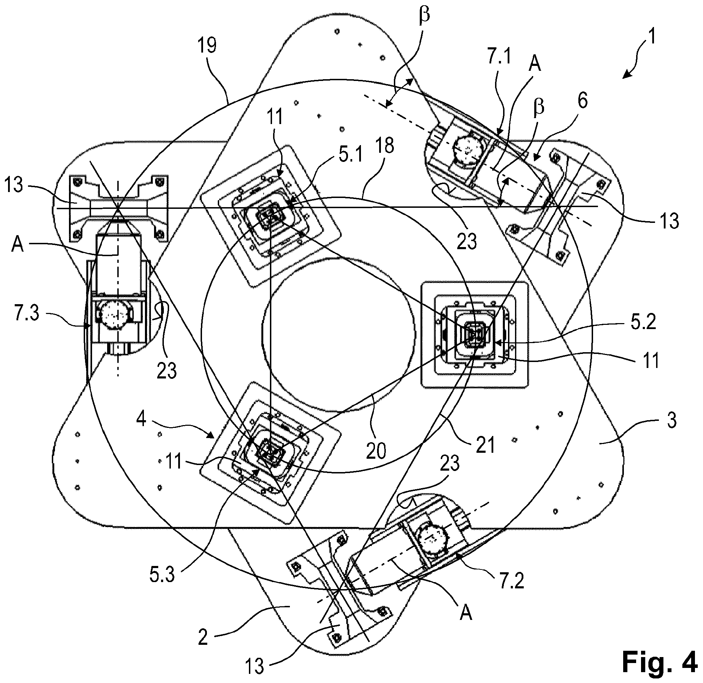

Anhand der Fig. 3 und 4 wird nunmehr eine zweite Ausführungsform eines erfindungsgemäßen 6-Achs-Positioniersystems 1 näher erläutert. Es soll in der Folge nur auf die wesentlichen Unterschiede zum vorangegangenen Ausführungsbeispiel eingegangen werden. Deshalb wir unter Verwendung der gleichen Bezugsziffern für ähnliche Bauteile ergänzend auf die obige Beschreibung verwiesen und sich nur auf die wesentlichen Unterschiede konzentriert.

Das in den Fig. 3 und 4 gezeigte 6-Achs-Positioniersystem 1 ist noch einmal speziell unter Verwendung gezielt angepasster Aktoren konfiguriert worden. Die Aktoren 5.1, 5.2 und 5.3 sind in der eingefahrenen Stellung nochmals kompakter, d.h. weniger lang und die Aktoren 7.1, 7.2. und 7.3 können in der gänzlich eingefahrenen Stellung der Aktoren 5.1, 5.2 und 5.3 mit ihrer Hauptachse A_{A} horizontal bzw. parallel zu einer von der Basis 2 aufgespannten Ebene angeordnet werden (siehe insbesondere Fig. 3). Hierdurch ergibt sich eine nochmals kompaktere, insbesondere flachere, Bauweise des 6-Achs-Positioniersystems 1.

Ein weiterer wesentlicher Unterscheid besteht in der Positionierung, d.h. Gruppierung der Aktorengruppen 4 und 6 zueinander. Aus der Fig. 4 ist zunächst zu erkennen, dass die dreiecksförmige Basis 2 und die dreiecksförmige bewegbare Einheit 3 um 30° verdreht zueinander in der Grundstellung angeordnet sind. Hierzu sind die Lagerböcke 13 und 15 sowie die zugehörigen Aktoren 7.1, 7.2 und 7.3 schräg verlaufend auf der Basis 2 und auch schräg **verlaufend** zur bewegbaren Einheit 3 in der Grundstellung platziert. D.h., dass in einer vollständig eingefahrenen Stellung der drei Aktoren 5.1, 5.2 und 5.3 der ersten und der zweiten Gruppe 4 und 6 die Hauptachsen A_{A} der drei Aktoren 7.1, 7.2 und 7.3 der zweiten Gruppe 6 jeweils um ca. 30° zu den Seitenkanten des zugehörigen aufgespannten Dreiecks 21 und/oder der Seitenkanten der Dreiecksformen der Basis 2 und der bewegbaren Einheit 3 angeordnet sind. Das heißt aber auch, dass die Hauptachsen A_{A} der Aktoren 7.1, 7.2 und 7.3 in der dargestellten Grundstellung (Fig. 4) parallel zu den Seitenkanten des Dreiecks 20 verlaufen. Entsprechend sind auch die Fensteraussparungen 10 und 11 bzw. die Befestigungspunkte an der Basis 2 und der bewegbaren Einheit 3 entsprechend um 30° verdreht zur jeweiligen Dreiecksform der Basis 2 bzw. der bewegbaren Einheit 3 platziert. Die zugehörigen Lagerböcke 13 und 15 können hierdurch auch stabiler ausgestaltet werden und weisen eine umgedrehte U-Form auf.

Die Aktoren 7.1, 7.2 und 7.3 weisen Anbauten 22 auf. Es kann sich hierbei z.B. um den bürstenlosen DC-Motor handeln, der mehr in die Mitte des Aktors 7.1, 7.2 und 7.3 gerückt ist. Dieser Anbau 22 steht in Richtung der bewegbaren Einheit 3 über. In der in Fig. 3 dargestellten flachgelegten Stellung der Aktoren 7.1, 7.2 und 7.3 würde dieser jeweils mit der bewegbaren Einheit 3 kollidieren. Deshalb weist die bewegbare Einheit 3 in diesem Bereich jeweils eine Aussparung 23 auf, in der der Anbau 22 aufgenommen ist. Die Aussparungen 23 sind so groß gewählt, dass geeignete Bewegungen der bewegbaren Einheit 3 ausführbar sind, d.h., auch Verdrehungen relativ zur Basis 2, ohne dass es zur Kollision des Anbaus 22 und der bewegbaren Einheit 3 kommt.

Die Aktoren 7.1, 7.2 und 7.3 befinden sich in der in Fig. 3 und 4 dargestellten Grundstellung ebenfalls in ihrer mittleren Stellung. Diese können sich ausgehend von dieser Grundstellung in einem Winkelbereich eines spitzen Winkels α verschwenken (von ≥ 0° bis maximal 45°, bevorzugt ≥ 0° bis maximal 30°) zu einer Horizontalen bzw. Parallelen P zu einer von der Basis 2 aufgespannten Ebene.

Es ergibt sich aufgrund der Gruppierung und Spezialisierung der Aktorengruppen 4 und 6 die erwähnte flache und sehr kompakte Bauweise eines Hochlast-6-Achs-Positioniersystems. Lasten von bis zu 2 t und mehr können mit geeignet dimensionierten 6-Achs-Positioniersystemen so bewegt und exakt innerhalb des bereitgestellten Arbeitsraums positioniert werden.

Ergänzend sei noch angemerkt, dass in den Fig. 3 und 4 aus Übersichtlichkeitsgründen auf die Darstellung der Steckverbinderplattform 16 und des Anschlusses 17 verzichtet wurde. Die Ansteuerung und Regelung des dargestellten 6-Achs-Positioniersystems 1 erfolgt entsprechend zum zuerst genannten Ausführungsbeispiel durch ein Zusammenspiel der sechs Aktoren.

### Bezugszeichenliste

- 1: 6-Achs-Positioniersystem
- 2: Basis
- 3: bewegbare Einheit
- 4: 1. Gruppe
- 5.1, 5.2, 5.3: Aktor
- 6: 2. Gruppe
- 7.1,7.2,7.3: Aktor
- 8: unteres Ende
- 9: oberes Ende
- 10: Fensteraussparung
- 11: Fensteraussparung
- 12: unteres Ende
- 13: Lagerblock
- 14: oberes Ende
- 15: Lagerblock
- 16: Steckverbinderplattform
- 17: Anschluss
- 18: Kreislinie
- 19: Kreislinie
- 20: Dreieck
- 21: Dreieck
- 22: Anbau
- 23: Aussparung

- α: Winkel
- A_{A}: Hauptachse Aktor 7.1, 7.2, 7.3
- Aᵢ: Hauptsache Aktor 5.1, 5.2, 5.3
- P: Parallele

## Patentansprüche

1. 6-Achs-Positioniersystem (1) mit einer Basis (2), einer bewegbaren Einheit (3) und sechs längenveränderlichen Aktoren (5.1, 5.2, 5.3; 7.1, 7.2, 7.3), deren eines Ende (8, 12) mit der Basis (2) und deren jeweils anderes Ende (9, 14) mit der bewegbaren Einheit (3) verbunden ist, wobei die sechs Aktoren (5.1, 5.2, 5.3; 7.1, 7.2, 7.3) in zwei Gruppen (4, 6) mit jeweils drei Aktoren (5.1, 5.2, 5.3; 7.1, 7.2, 7.3) unterteilt sind und dass die Aktoren (5.1, 5.2, 5.3) der ersten Gruppe (4) innerhalb eines von den Aktoren (7.1, 7.2, 7.3) der zweiten Gruppe (6) umgrenzten Bereichs auf der Basis (2) und die Aktoren (5.1, 5.2, 5.3) der ersten Gruppe (4) innerhalb eines von den Aktoren (7.1, 7.2, 7.3) der zweiten Gruppe (6) umgrenzten Bereichs an der bewegbaren Einheit (3) angeordnet sind, wobei jeweils die unteren und oberen Enden der drei Aktoren (7.1, 7.2, 7.3) der zweiten Gruppe (6) sowohl mit der Basis (2) als auch mit der bewegbaren Einheit (3) mittels einer Schwenkbefestigung verbunden sind, wobei jeweils die oberen Enden der drei Aktoren (5.1, 5.2, 5.3) der ersten Gruppe mit der bewegbaren Einheit (3) mittels einer Schwenkbefestigung verbunden sind, und wobei jeweils die unteren Enden der drei Aktoren (5.1, 5.2, 5.3) der ersten Gruppe mit der Basis (2) mittels einer im Verstellbetrieb des 6-Achs-Positioniersystems (1) verschwenkbaren Schwenkbefestigung verbunden sind, **dadurch gekennzeichnet, dass** die drei Aktoren (5.1, 5.2, 5.3) der ersten Gruppe (4) derart längenveränderlich und mit der Basis (2) und der bewegbaren Einheit (3) schwenkbar verbunden sind, dass die drei Aktoren (5.1, 5.2, 5.3) der ersten Gruppe (4) jeweils in einem Winkelbereich von max. ± 30°, bevorzug max. ± 15° zu einer Vertikalen bzw. Senkrechten zu einer von der Basis (2) aufgespannten Ebene bewegbar angeordnet sind, und dass die drei Aktoren (7.1, 7.2 und 7.3) der zweiten Gruppe (6) derart längenveränderlich und mit der Basis (2) und der bewegbaren Einheit (3) schwenkbar verbunden sind, dass die drei Aktoren (7.1, 7.2 und 7.3) der zweiten Gruppe (6) jeweils in einem Winkelbereich von ≥ 0 bis max. 45°, bevorzugt ≥ 0 bis max. 30°, zu einer Horizontalen bzw. Parallelen (P) zu einer von der Basis (2) aufgespannten Ebene bewegbar angeordnet sind.

2. 6-Achs-Positioniersystem (1) nach Anspruch 1, **dadurch gekennzeichnet, dass** die drei Aktoren (5.1, 5.2, 5.3) der ersten Gruppe (4) in einer Grundstellung die gleiche Länge aufweisen und in dieser Grundstellung die Hauptachsen (Aᵢ) der drei Aktoren (5.1, 5.2, 5.3) der ersten Gruppe (4) parallel zu einer Vertikalen bzw. einer Senkrechten zu einer von der Basis (2) aufgespannten Ebene angeordnet sind.

3. 6-Achs-Positioniersystem (1) nach Anspruch 2, **dadurch gekennzeichnet, dass** die drei Aktoren (7.1, 7.2 und 7.3) der zweiten Gruppe (6) derart längenveränderlich und mit der Basis (2) und der bewegbaren Einheit (3) schwenkbar verbunden sind, dass bei einer Hubbewegung der drei Aktoren (5.1, 5.2, 5.3) der ersten Gruppe (4) von einer minimalen zu einer maximalen Hubposition bei Beibehaltung der Grundstellung die drei Aktoren (7.1, 7.2 und 7.3) der zweiten Gruppe (6) jeweils in einem Winkelbereich von ≥ 0° bis mindestens 15°, bevorzugt von ≥ 0° bis mindestens 30° zu einer Horizontalen bzw. einer Parallelen (P) zu einer von der Basis (2) aufgespannten Ebene bewegbar angeordnet sind.

4. 6-Achs-Positioniersystem (1) nach einem der Ansprüche 1 bis 3, **dadurch gekennzeichnet, dass** die drei Aktoren (5.1, 5.2, 5.3) der ersten Gruppe (4) als Schwerlastaktoren ausgestaltet sind, die laststärker sind als die drei Aktoren (7.1, 7.2, 7.3) der zweiten Gruppe (6).

5. 6-Achs-Positioniersystem (1) nach einem der Ansprüche 1 bis 4, **dadurch gekennzeichnet, dass** die Mittelpunkte der Schwenkbefestigungen der drei Aktoren (5.1, 5.2, 5.3) der ersten Gruppe (4) an der Basis (2) und/oder der bewegbaren Einheit (3) auf einer ersten Kreislinie (18) und die Mittelpunkte der Schwenkbefestigungen der drei Aktoren (7.1, 7.2, 7.3) der zweiten Gruppe (6) an der bewegbaren Basis (2) und/oder der bewegbaren Einheit (3) auf einer entsprechenden zweiten Kreislinie (19) liegen und die erste Kreislinie (18) innerhalb der entsprechend zugehörigen zweiten Kreislinie (19) an der Basis (2) und/oder der bewegbaren Einheit (3) liegt, bevorzugt die erste Kreislinie (18) konzentrisch zur entsprechend zugehörigen zweiten Kreislinie (19) an der Basis (2) und/oder an der bewegbaren Einheit (3) positioniert ist.

6. 6-Achs-Positioniersystem (1) nach Anspruch 5, **dadurch gekennzeichnet, dass** die von der ersten Kreislinie (18) umgrenzte Fläche an der Basis (2) und/oder der bewegbaren Einheit (3) mindestens doppelt so klein, bevorzugt mindestens dreimal so klein und weiter bevorzugt mindestens viermal so klein ist wie die von der entsprechend zugehörigen zweiten Kreislinie (19) umgrenzte Fläche an der Basis (2) und/oder an der bewegbaren Einheit (3).

7. 6-Achs-Positioniersystem (1) nach einem der Ansprüche 1 bis 6, **dadurch gekennzeichnet, dass** die Länge der drei Aktoren (7.1, 7.2, 7.3) der zweiten Gruppe (6) mindestens 1,5-mal, bevorzugt mindestens 2-mal, größer ist als die Länge der drei Aktoren (5.1, 5.2, 5.3) der ersten Gruppe (4), wenn sich die drei Aktoren (5.1, 5.2, 5.3) der ersten Gruppe (4) in einer mittleren Stellung befinden.

8. 6-Achs-Positioniersystem (1) nach einem der Ansprüche 1 bis 7, **dadurch gekennzeichnet, dass** die bewegbare Einheit (3) Aussparungen (23) bzw. Fenster aufweist, in die mindestens ein Bestandteil bzw. ein Anbau der bzw. an den drei Aktoren (7.1, 7.2, 7.3) der zweiten Gruppe (6) in einer mittleren Stellung der drei Aktoren (5.1, 5.2, 5.3) der ersten Gruppe (4) eingeführt sind.

9. 6-Achs-Positioniersystem (1) nach einem der Ansprüche 1 bis 8, **dadurch gekennzeichnet, dass** der maximale Verstellweg eines Aktors (7.1, 7.2, 7.3) der zweiten Gruppe (6) mindestens 1,5-mal größer, bevorzugt mindestens 2-mal, ist als der maximale Verstellweg eines Aktors (5.1, 5.2, 5.3) der ersten Gruppe (4).

10. 6-Achs-Positioniersystem (1) nach einem der Ansprüche 1 bis 9, **dadurch gekennzeichnet, dass** Verbindungsgeraden der Mittelpunkte der Schwenkbefestigungen der drei Aktoren (5.1, 5.2, 5.3) der ersten Gruppe (4) an der Basis (2) und an der bewegbaren Einheit (3) jeweils ein Dreieck (20) aufspannen und dass Verbindungsgeraden der Mittelpunkte der Schwenkbefestigungen der drei Aktoren (7.1, 7.2, 7.3) der zweiten Gruppe (6) an der Basis (2) und an der bewegbaren Einheit (3) jeweils ein Dreieck (21) aufspannen, wobei die entsprechend zugeordneten Dreiecke (20, 21) an der Basis (2) und an der bewegbaren Einheit (3) eine gleiche Ausrichtung ihrer Ecken aufweisen oder um einen maximalen Winkel von 45°, bevorzugt ca. 30°, zueinander gedreht sind.

11. 6-Achs-Positioniersystem (1) nach einem der Ansprüche 1 bis 10, **dadurch gekennzeichnet, dass** die Basis (2) und/oder die bewegbare Einheit (3) eine Dreiecksform mit bevorzugt abgerundeten Ecken aufweist.

12. 6-Achs-Positioniersystem (1) nach Anspruch 10 oder Anspruch 10 und 11, **dadurch gekennzeichnet, dass** in mittlerer Stellung der drei Aktoren (5.1, 5.2, 5.3) der ersten Gruppe (4) die Hauptachsen ( A_{A}) der drei Aktoren (7.1, 7.2, 7.3) der zweiten Gruppe (6) jeweils um maximal ± 15° geneigt, bevorzugt parallel, zu einer angrenzenden Seitenkante des jeweils zugehörigen aufgespannten Dreiecks (19) und/oder einer angrenzenden Seitenkante der Dreiecksform(en) der Basis (2) und/oder der bewegbaren Einheit (3) angeordnet sind.

13. 6-Achs-Positioniersystem (1) nach Anspruch 10 oder Anspruch 10 und 11, **dadurch gekennzeichnet, dass** in mittlerer Stellung der drei Aktoren (5.1, 5.2, 5.3) der ersten Gruppe (4) die Hauptachsen (A_{A}) der drei Aktoren (7.1, 7.2, 7.3) der zweiten Gruppe (6) jeweils in einem Bereich von 15° bis 45°, bevorzugt ca. 30°, zu einer angrenzenden Seitenkante des zugehörigen aufgespannten Dreiecks (21) und/oder einer angrenzenden Seitenkante der Dreiecksform(en) der Basis (2) und/oder der bewegbaren Einheit (3) geneigt angeordnet sind.

## Claims

1. A 6-axis positioning system (1), comprising a base (2), a movable unit (3) and six variable-length actuators (5.1, 5.2, 5.3; 7.1, 7.2, 7.3), one end (8, 12) of each actuator being connected to the base (2) and the other end (9, 14) of each actuator being connected to the movable unit (3), wherein the six actuators (5.1, 5.2, 5.3; 7.1, 7.2, 7.3) are divided into two groups (4, 6) each having three actuators (5.1, 5.2, 5.3; 7.1, 7.2, 7.3), and the actuators (5.1, 5.2, 5.3) of the first group (4) are arranged on the base (2) within a region bounded by the actuators (7.1, 7.2, 7.3) of the second group (6), and the actuators (5.1, 5.2, 5.3) of the first group (4) are arranged on the movable unit (3) within a region bounded by the actuators (7.1, 7.2, 7.3) of the second group (6); wherein the lower end and the upper end of each of the three actuators (7.1, 7.2, 7.3) of the second group (6) are connected to the base (2) and to the movable unit (3), respectively, by means of respective pivot fastening systems; wherein the upper end of each of the three actuators (5.1, 5.2, 5.3) of the first group is connected to the movable unit (3) by means of a pivot fastening system, and wherein the lower end of each of the three actuators (5.1, 5.2, 5.3) of the first group is connected to the base (2) by means of a pivot fastening system that can be pivoted during adjustment operation of the 6-axis positioning system (1), **characterized in that** the three actuators (5.1, 5.2, 5.3) of the first group (4) are variable in length and pivotably connected to the base (2) and the movable unit (3) in such a way that each of the three actuators (5.1, 5.2, 5.3) of the first group (4) is movably arranged in an angular range of max. ± 30°, preferably max. ± 15° relative to a vertical or perpendicular to a plane spanned by the base (2), and the three actuators (7.1, 7.2 and 7.3) of the second group (6) are variable in length and pivotably connected to the base (2) and the movable unit (3) in such a way that each of the three actuators (7.1, 7.2 and 7.3) of the second group (6) is arranged to be movable in an angular range of ≥ 0 to max. 45°, preferably ≥ 0 to max. 30° relative to a horizontal or parallel (P) to a plane spanned by the base (2).

2. The 6-axis positioning system (1) according to claim 1, **characterized in that** the three actuators (5.1, 5.2, 5.3) of the first group (4) have the same length in a basic position and, in this basic position, the main axes (Ai) of the three actuators (5.1, 5.2, 5.3) of the first group (4) are arranged parallel to a vertical or a perpendicular to a plane spanned by the base (2).

3. The 6-axis positioning system (1) according to claim 2, **characterized in that,** the three actuators (7.1, 7.2 and 7.3) of the second group (6) are variable in length and pivotably connected to the base (2) and the movable unit (3) in such a way that, during a stroke movement of the three actuators of the first group (5.1, 5.2, 5.3) from a minimum to a maximum stroke position while maintaining the basic position, each of the three actuators (7.1, 7.2 and 7.3) of the second group (6) is arranged movably in an angular range of ≥ 0° to at least 15°, preferably ≥ 0° to at least 30° relative to a horizontal or parallel (P) to a plane spanned by the base (2).

4. The 6-axis positioning system (1) according to any one of claims 1 to 3, **characterized in that** the three actuators (5.1, 5.2, 5.3) of the first group (4) are configured as heavy-load actuators, which have a higher load capacity than the three actuators (7.1, 7.2, 7.3) of the second group (6).

5. The 6-axis positioning system (1) according to any one of claims 1 to 4, **characterized in that** the centers of the pivot fastening systems of the three actuators (5.1, 5.2, 5.3) of the first group (4) lie on the base (2) and/or the movable unit (3) on a first circular line (18) and the centers of the pivot fastening systems of the three actuators (7.1, 7.2, 7.3) of the second group (6) lie on the movable base (2) and/or the movable unit (3) on a corresponding second circular line (19), and the first circular line (18) lies within the correspondingly associated second circular line (19) on the base (2) and/or the movable unit (3), preferably the first circular line (18) is positioned concentrically to the correspondingly associated second circular line (19) on the base (2) and/or on the movable unit (3).

6. The 6-axis positioning system (1) according to claim 5, **characterized in that** the area on the base (2) and/or the movable unit (3) bounded by the first circular line (18) is at least twice as small, preferably at least three times as small, and further preferably at least four times as small as the area on the base (2) and/or the movable unit (3) bounded by the correspondingly associated second circular line (19).

7. The 6-axis positioning system (1) according to any one of claims 1 to 6, **characterized in that** the length of the three actuators (7.1, 7.2, 7.3) of the second group (6) is at least 1.5 times, preferably at least 2 times, greater than the length of the three actuators (5.1, 5.2, 5.3) of the first group (4) when the three actuators (5.1, 5.2, 5.3) of the first group (4) are in a central position.

8. The 6-axis positioning system (1) according to any one of claims 1 to 7, **characterized in that** the movable unit (3) has recesses (23) or windows into which at least one component or attachment of or to the three actuators (7.1, 7.2, 7.3) of the second group (6) is inserted in a central position of the three actuators (5.1, 5.2, 5.3) of the first group (4).

9. The 6-axis positioning system (1) according to any one of claims 1 to 8, **characterized in that** the maximum adjustment path of an actuator (7.1, 7.2, 7.3) of the second group (6) is at least 1.5 times greater, preferably at least 2 times greater, than the maximum adjustment path of an actuator (5.1, 5.2, 5.3) of the first group (4).

10. The 6-axis positioning system (1) according to any one of claims 1 to 9, **characterized in that** each of the connecting lines of the centers of the pivot fastening systems of the three actuators (5.1, 5.2, 5. 3) of the first group (4) forms a triangle (20) on the base (2) and on the movable unit (3), and **in that** each of the connecting lines of the centers of the pivot fastening systems of the three actuators (7.1, 7.2, 7.3) of the second group (6) forms a triangle (21) on the base (2) and on the movable unit (3), wherein the correspondingly associated triangles (20, 21) on the base (2) and on the movable unit (3) have an identical orientation of their corners or are rotated relative to each other by a maximum angle of 45°, preferably about 30°.

11. The 6-axis positioning system (1) according to any one of claims 1 to 10, **characterized in that** the base (2) and/or the movable unit (3) has a triangular shape with preferably rounded corners.

12. The 6-axis positioning system (1) according to claim 10 or claims 10 and 11, **characterized in that** in the central position of the three actuators (5.1, 5.2, 5.3) of the first group (4) each of the main axes (A_{A}) of the three actuators (7.1, 7.2, 7.3) of the second group (6) is inclined by a maximum of ± 15°, preferably parallel, to an adjacent side edge of the respectively associated spanned triangle (19) and/or an adjacent side edge of the triangular shape(s) of the base (2) and/or the movable unit (3).

13. The 6-axis positioning system (1) according to claim 10 or claims 10 and 11, **characterized in that** in the central position of the three actuators (5.1, 5.2, 5.3) of the first group (4) each of the main axes (A_{A}) of the three actuators (7.1, 7.2, 7. 3) of the second group (6) is arranged inclined in a range from 15° to 45°, preferably about 30°, to an adjacent side edge of the corresponding spanned triangle (21) and/or an adjacent side edge of the triangular shape(s) of the base (2) and/or of the movable unit (3).

## Revendications

1. Système de positionnement à 6 axes (1) comprenant une base (2), une unité mobile (3) et six actionneurs à longueur modifiable (5.1, 5.2, 5.3 ; 7.1, 7.2, 7.3), dont une extrémité (8, 12) est reliée à la base (2) et dont l'autre extrémité (9, 14) respective est reliée à l'unité mobile (3), dans lequel les six actionneurs (5.1, 5.2, 5.3 ; 7.1, 7.2, 7.3) sont divisés en deux groupes (4, 6) comprenant respectivement trois actionneurs (5.1, 5.2, 5.3 ; 7.1, 7.2, 7.3) et les actionneurs (5.1, 5.2, 5.3) du premier groupe (4) sont agencés sur la base (2) dans une région délimitée par les actionneurs (7.1, 7.2, 7.3) du second groupe (6) et les actionneurs (5.1, 5.2, 5.3) du premier groupe (4) sont agencés au niveau de l'unité mobile (3) dans une région délimitée par les actionneurs (7.1, 7.2, 7.3) du second groupe (6), dans lequel les extrémités inférieures et supérieures des trois actionneurs (7.1, 7.2, 7.3) du second groupe (6) sont respectivement reliées à la base (2) et à l'unité mobile (3) au moyen d'une fixation pivotante, dans lequel les extrémités supérieures des trois actionneurs (5.1, 5.2, 5.3) du premier groupe sont respectivement reliées à l'unité mobile (3) au moyen d'une fixation pivotante, et dans lequel les extrémités inférieures des trois actionneurs (5.1, 5.2, 5.3) du premier groupe sont respectivement reliées à la base (2) au moyen d'une fixation pivotante pouvant pivoter en mode de réglage du système de positionnement à 6 axes (1), **caractérisé en ce que** les trois actionneurs (5.1, 5.2, 5.3) du premier groupe (4) sont modifiables en longueur et sont reliés de manière pivotante à la base (2) et à l'unité mobile (3), de telle manière que les trois actionneurs (5.1, 5.2, 5.3) du premier groupe (4) sont respectivement agencés de manière mobile dans une plage angulaire de ± 30° au maximum, de manière préférée de ± 15° au maximum, par rapport à une verticale ou à une perpendiculaire à un plan défini par la base (2), et **en ce que** les trois actionneurs (7.1, 7.2 et 7.3) du second groupe (6) sont modifiables en longueur et sont reliés de manière pivotante à la base (2) et à l'unité mobile (3), de telle manière que les trois actionneurs (7.1, 7.2 et 7.3) du second groupe (6) sont respectivement agencés de manière mobile dans une plage angulaire comprise entre 0 et 45° au maximum, de manière préférée comprise entre 0 et 30° au maximum, par rapport à une horizontale ou à des parallèles (P) à un plan défini par la base (2).

2. Système de positionnement à 6 axes (1) selon la revendication 1, **caractérisé en ce que** les trois actionneurs (5.1, 5.2, 5.3) du premier groupe (4) ont la même longueur dans une position de base et, dans cette position de base, les axes principaux (Aᵢ) des trois actionneurs (5.1, 5.2, 5.3) du premier groupe (4) sont agencés parallèlement à une verticale ou à une perpendiculaire à un plan défini par la base (2).

3. Système de positionnement à 6 axes (1) selon la revendication 2, **caractérisé en ce que** les trois actionneurs (7.1, 7.2 et 7.3) du second groupe (6) sont modifiables en longueur et sont reliés de manière pivotante à la base (2) et à l'unité mobile (3), de telle manière que, lors d'un mouvement de levage des trois actionneurs (5.1, 5.2, 5.3) du premier groupe (4) depuis une position de levage minimale jusqu'à une position de levage maximale tout en maintenant la position de base, les trois actionneurs (7.1, 7.2 et 7.3) du second groupe (6) sont respectivement agencés de manière mobile dans une plage angulaire comprise entre 0° et au moins 15°, de manière préférée comprise entre 0° et au moins 30° par rapport à une horizontale ou à des parallèles (P) à un plan défini par la base (2).

4. Système de positionnement à 6 axes (1) selon l'une quelconque des revendications 1 à 3, **caractérisé en ce que** les trois actionneurs (5.1, 5.2, 5.3) du premier groupe (4) sont conçus comme des actionneurs de charge lourde, qui sont plus puissants que les trois actionneurs (7.1, 7.2, 7.3) du second groupe (6).

5. Système de positionnement à 6 axes (1) selon l'une quelconque des revendications 1 à 4, **caractérisé en ce que** les centres des fixations pivotantes des trois actionneurs (5.1, 5.2, 5.3) du premier groupe (4) au niveau de la base (2) et/ou de l'unité mobile (3) se trouvent sur une première ligne circulaire (18) et les centres des fixations pivotantes des trois actionneurs (7.1, 7.2, 7.3) du second groupe (6) au niveau de la base mobile (2) et/ou de l'unité mobile (3) se trouvent sur une seconde ligne circulaire (19) correspondante et la première ligne circulaire (18) se trouve à l'intérieur de la seconde ligne circulaire (19) correspondante au niveau de la base (2) et/ou de l'unité mobile (3), de manière préférée la première ligne circulaire (18) est positionnée de manière concentrique par rapport à la seconde ligne circulaire (19) correspondante au niveau de la base (2) et/ou de l'unité mobile (3).

6. Système de positionnement à 6 axes (1) selon la revendication 5, **caractérisé en ce que** la surface délimitée par la première ligne circulaire (18) au niveau de la base (2) et/ou de l'unité mobile (3) est au moins deux fois inférieure, de manière préférée au moins trois fois inférieure et de manière plus préférée au moins quatre fois inférieure à la surface délimitée par la seconde ligne circulaire (19) correspondante au niveau de la base (2) et/ou de l'unité mobile (3).

7. Système de positionnement à 6 axes (1) selon l'une quelconque des revendications 1 à 6, **caractérisé en ce que** la longueur des trois actionneurs (7.1, 7.2, 7.3) du second groupe (6) est au moins 1,5 fois, de manière préférée au moins 2 fois, supérieure à la longueur des trois actionneurs (5.1, 5.2, 5.3) du premier groupe (4) lorsque les trois actionneurs (5.1, 5.2, 5.3) du premier groupe (4) se trouvent dans une position centrale.

8. Système de positionnement à 6 axes (1) selon l'une quelconque des revendications 1 à 7, **caractérisé en ce que** l'unité mobile (3) présente des évidements (23) ou des fenêtres dans lesquel(le)s sont insérés au moins un composant ou une extension des, ou au niveau des, trois actionneurs (7.1, 7.2, 7.3) du second groupe (6) dans une position centrale des trois actionneurs (5.1, 5.2, 5.3) du premier groupe (4).

9. Système de positionnement à 6 axes (1) selon l'une quelconque des revendications 1 à 8, **caractérisé en ce que** la course de réglage maximale d'un actionneur (7.1, 7.2, 7.3) du second groupe (6) est au moins 1,5 fois, de manière préférée au moins 2 fois, supérieure à la course de réglage maximale d'un actionneur (5.1, 5.2, 5.3) du premier groupe (4).

10. Système de positionnement à 6 axes (1) selon l'une quelconque des revendications 1 à 9, **caractérisé en ce que** les droites de liaison des centres des fixations pivotantes des trois actionneurs (5.1, 5.2, 5.3) du premier groupe (4) au niveau de la base (2) et au niveau de l'unité mobile (3) définissent respectivement un triangle (20) et **en ce que** les droites de liaison des centres des fixations pivotantes des trois actionneurs (7.1, 7.2, 7.3) du second groupe (6) au niveau de la base (2) et au niveau de l'unité mobile (3) définissent respectivement un triangle (21), dans lequel les triangles (20, 21) associés de manière correspondante au niveau de la base (2) et au niveau de l'unité mobile (3) présentent une même orientation de leurs coins ou sont tournés l'un par rapport à l'autre selon un angle maximal de 45°, de manière préférée d'environ 30°.

11. Système de positionnement à 6 axes (1) selon l'une quelconque des revendications 1 à 10, **caractérisé en ce que** la base (2) et/ou l'unité mobile (3) présente une forme triangulaire avec des coins de manière préférée arrondis.

12. Système de positionnement à 6 axes (1) selon la revendication 10 ou la revendication 10 et 11, **caractérisé en ce que,** dans la position centrale des trois actionneurs (5.1, 5.2, 5.3) du premier groupe (4), les axes principaux (AA) des trois actionneurs (7.1, 7.2, 7.3) du second groupe (6) sont respectivement inclinés de ± 15° au maximum, et sont de manière préférée parallèles, par rapport à un bord latéral adjacent du triangle (19) défini correspondant et/ou à un bord latéral adjacent de la ou des forme(s) triangulaire(s) de la base (2) et/ou de l'unité mobile (3).

13. Système de positionnement à 6 axes (1) selon la revendication 10 ou la revendication 10 et 11, **caractérisé en ce que,** dans la position centrale des trois actionneurs (5.1, 5.2, 5.3) du premier groupe (4), les axes principaux (AA) des trois actionneurs (7.1, 7.2, 7.3) du second groupe (6) sont respectivement inclinés dans une plage comprise entre 15° et 45°, de manière préférée d'environ 30°, par rapport à un bord latéral adjacent du triangle (21) défini correspondant et/ou à un bord latéral adjacent de la ou des forme(s) triangulaire(s) de la base (2) et/ou de l'unité mobile (3).
